**Europäisches Patentamt**

**European Patent Office**

**Office européen des brevets**

(19)

(11) Veröffentlichungsnummer : **0 023 579**
**B1**

(12)

# EUROPÄISCHE PATENTSCHRIFT

(45) Veröffentlichungstag der Patentschrift :
**17.10.84**

(21) Anmeldenummer : **80103780.5**

(22) Anmeldetag : **03.07.80**

(51) Int. Cl.³ : **C 04 B. 13/26, C 04 B 25/06**

---

(54) **Nichtbrennbare Bau-, Dämm-, Möbelbau- und Innenausbaustoffe.**

---

(30) Priorität : **07.07.79 DE 2927578**

(43) Veröffentlichungstag der Anmeldung :
**11.02.81 Patentblatt 81/06**

(45) Bekanntmachung des Hinweises auf die Patenterteilung : **17.10.84 Patentblatt 84/42**

(84) Benannte Vertragsstaaten :
**AT BE CH DE FR GB IT LI LU NL SE**

(56) Entgegenhaltungen :
**EP-A- 0 002 513**
**EP-A- 0 005 902**
**BE-A-  764 500**
**DE-A- 2 113 043**
**DE-A- 2 713 984**
**DE-A- 2 743 884**

(73) Patentinhaber : **Dörentruper Sand- und Thonwerke GmbH**
**D-4926 Dörentrup (DE)**

(72) Erfinder : **Bovender, Franz**
**Südwall 6**
**D-4150 Krefeld (DE)**
Erfinder : **Wendeborn, Wulff, Dr.**
**An der Mainte 18**
**D-3211 Rheden 2 OT. Wallenstedt (DE)**
Erfinder : **Florian, Rudolf**
**Mossenberg 34**
**D-4933 Blomberg (DE)**

(74) Vertreter : **Patentanwaltsbüro Cohausz & Florack**
**Schumannstrasse 97**
**D-4000 Düsseldorf 1 (DE)**

EP 0 023 579 B1

## Beschreibung

Die Erfindung betrifft ein Verfahren zur Herstellung nichtbrennbarer flächiger Körper für Bau-, Dämm-, Möbelbau- und Innenausbauteile durch Schichten hydraulisch abbindender anorganischer Stoffe, die auch Zuschlagstoffe oder Modifizierungsmittel und mindestens teilweise Glasfaser oder -matten enthalten.

Der derzeitige Marktbedarf an flächigen Bau-, Dämm-, und Möbelbau- und Innenausbaustoffen wird aus verschiedenen geeigneten Werkstoffen und Werkstoffkombinationen gedeckt, die nach vielfältigen und abgestimmten Verfahren hergestellt und verarbeitet worden sind.

Von Holzwerkstoffen, wie Sperrhölzer, Holzspanplatten, Holzwolle-Leichtbauplatten usw., über natürliche Bausteine, gebrannte Steine, Tonwaren, Fliesen usw., schließlich Kalksandstein, Beton- und Leichtbetonsysteme, Asbest- und Gipsbauplatten bis zu diversen, auch Kunststoff enthaltenden Verbundsystemen stehen diese bewährten Produkte in Abhängigkeit von den an sie gestellten Anforderungen bezüglich ihres jeweils gewünschten Eigenschaftsbildes dem Markt und dem Verarbeiter zur Verfügung.

Gewünschte Eigenschaftsbilder ergeben sich primär naturgemäß aus den Anforderungen, denen diese Produkte bei der Herstellung, dem Vertrieb, Verbau und auch beim langfristigen Gebrauch genügen müssen, und sekundär aus vielfach schwer beurteilbaren — zum Teil subjektiven — merkantilen Gesichtspunkten.

Allein der Katalog der Primärkriterien für die Bestimmung der Gebrauchstauglichkeit ist vielschichtig und enthält unter anderem Forderungen nach Feuerwiderstand, Wasserbeständigkeit, zweckgerechte Wasseraufnahme, Frost- und Tauwechselbeständigkeit, Wurzelfestigkeit, Schall- und Wärmedämmvermögen, geringe Dichte, Transportstabilität, hohe Biegezugfestigkeit und -steifigkeit, hohe Druck- und Querzugfestigkeit, Verkleb- und/oder Verfugbarkeit, Kaschier- und/oder Lackierbarkeit, einheitliches Oberflächenbild, angenehmer Griff und Klang, physiologische Unbedenklichkeit, Möglichkeit zur Krafteinleitung und Schraubenhaltevermögen, Licht- und Wetterechtheit, wirtschaftlich sicher reproduzierbare Herstellbarkeit, langfristige Verfügbarkeit der Rohstoffe und vieles andere mehr.

Diese noch unvollständige Aufzählung zeigt deutlich, daß alle bekannten Bau-, Dämm-, Möbelbau- und Innenausbaustoffe bei Erfüllung der einen Anforderungen in ihrem Verhalten bezüglich der anderen Anforderungen einer Überprüfung nicht standhalten können. Der Baufachmann hat sich daher lange mit Kompromissen abfinden müssen, die sich aus scheinbar von Natur her diametralen Forderungen ergaben, bzw. gewisse Forderungskomplexe als vereinbare oder unvereinbare Gesetzmäßigkeiten angesehen.

Aus diesem Mangel ergab sich die Aufgabe, einen Bau-, Dämm-, Möbelbau- und Innenausbaustoff zur Herstellung flächiger Körper zur Verfügung zu stellen, der eine möglichst große Bandbreite von verschiedenen technischen Anforderungen — vor allem auch hinsichtlich der scheinbar gegensätzlichen Natur — wirtschaftlich erfüllen kann.

Erfindungsgemäß wird zur Lösung dieser Aufgabe bei einem Verfahren der eingangs genannten Art vorgeschlagen, daß mindestens zwischen zwei Schichten aus mit Glasfasermatten und/oder -gewebe verstärkten hydraulisch abbindenen anorganischen Stoffen eine 0,2 bis 18 Gew.-% eines Isocyanats mit mindestens zwei Isocyanatgruppen im Molekül enthaltende hydraulisch abbindende Masse, der Leichtzuschlagstoffe zugesetzt worden sind, aufgebracht und der geschichtete flächige Körper bei Temperaturen von 35 bis 250 °C verpreßt, anschließend entformt wird, wobei die weitere Verfestigung bis zur Endfestigkeit durch Hydratation erfolgt. Der Zusatz geringer Mengen feuchtigkeitsreaktiver mehrfunktioneller Isocyanate zu flüssigen Mörtel- und Betonmischungen beeinflußt diese bei normalen Arbeits- und Raumtemperaturen in ihrer Konsistenz in frischem Zustand nur wenig, die damit versetzten Massen dicken jedoch bei Wärmezufuhr sehr rasch so stark ein, daß eine Entformung in kürzester Zeit möglich wird.

Die DE-A-2 713 984 gibt das Beschichten anorganischer Hohlperlen mit flüssigem Polyisocyanat bekannt, woraus leichte, lagerfähige Wärmedämm-Formteile herstellbar sind. Durch Zusatz von Wasser, das mit dem Polyisocyanat reagiert, kann der Stoff gehärtet werden. Dagegen erfolgt bei dem erfindungsgemäßen Verfahren der Formungsprozeß durch hydraulische Hydratation der Bindemittel. Dabei stören die Isocyanate nicht, so daß im Anschluß an die Formgebung eine Nachhärtung ausgeführt werden kann.

Weiterhin wurde festgestellt, daß dieses System mit allen üblichen Zuschlag- und Leichtzuschlagstoffen verträglich ist und sich durch faserförmige Armierungsstoffe deutlich verstärken läßt.

Das erhaltene Material ist unter anderem wasserfest, feuerbeständig, kaschier- und lackierbar.

Das Wesen der Erfindung besteht demnach in der Bereitstellung eines wirtschaftlich herstellbaren, warmeindickenden und schnell entformbaren, wasser- und feuerbeständigen, in der Dichte variierbaren, wärme- und schalldämmenden, mechanisch hochfesten, kaschier- und lackierbaren, frost- und taubeständigen, wurzelfesten, transportstabilen, verkleb- und verfugbaren flächigen Bau-, Dämm-, Möbelbau- und Innenausbaustoffes mit einheitlicher Oberfläche sowie angenehmem Griff und Klang, dessen zur Herstellung benötigten Ausgangsstoffe verflügbar sind und voraussichtlich verfügbar bleiben werden.

Erfindungsgemäß kommen zur Eindickung der Aufbereitungen aus hydraulischen Bindemitteln aliphatische, cycloaliphatische, aromatische, araliphatische und heterocyclische Isocyanate mit mindestens zwei Isocyan-Gruppen in Betracht, wie sie z. B. aus « Annalen der Chemie », Band 562, Seiten 75 bis 136, bekannt sind. Beispiele solcher Isocyanate sind : Äthylen-diisocyanat, 1,4-Tetramethylen-diisocyanat, 1,6-Hexamethylen-diisocyanat, 1,12-Dodecan-diisocyanat, Cyclobutan-1,3-diisocyanat, Cyclohexan-1,3- und -1,4-diisocyanat sowie Gemische dieser Isomeren, 1-Isocyan-3,3,5-trimethyl-5-isocyan-methyl-cyclohexan, 2,4- und 2,6-Hexahydrotoluylen-diisocyanat sowie Gemische dieser Isomeren, Hexahydro-1,3- und/oder -1,4-phenylen-diisocyanat, Perhydro-2,4'- und/oder -4,4'-diphenyl-methan-diisocyanat, 2,4- und 2,6-Toluylen-diisocyanat und Gemische dieser Isomeren, Diphenyl-methan-2,4'- und/oder -4,4'-diisocyanat, Naphthylen-1,5-diisocyanat, Triphenyl-methan-4,4',4"-triisocyanat, Polyphenyl-polymethylen-polyisocyanate, wie sie durch die Einwirkung von Phosgen auf Anilin-Formaldehyd-Kondensationsprodukte erhalten werden, auch perchlorierte Arylpolyisocyanate, Carboimid-Gruppen aufweisende Polyisocyanate, Allophanat-Gruppen aufweisende Polyisocyanate, Isocyanurat-Gruppen aufweisende Polyisocyanate, Urethan-Gruppen aufweisende Polyisocyanate, acylierte Harnstoffgruppen aufweisende Polyisocyanate, Biuretgruppen aufweisende Polyisocyanate, durch Telomerisationsreaktionen hergestellte Polyisocyanate, Estergruppen aufweisende Isocyanate sowie Umsetzungsprodukte der obengenannten Isocyanate mit Acetalen.

Es ist auch möglich, die bei der technischen Herstellung der Isocyanate anfallenden isocyanatgruppenhaltigen Destillationsrückstände, gegebenenfalls gelöst in einem oder mehreren der vorgenannten Polyisocyanate, einzusetzen. Ferner ist es möglich, beliebige Mischungen der vorstehend aufgeführten Isocyanate mit mindestens zwei Isocyan-Gruppen zu verwenden.

Besonders vorteilhaft sind in der Regel die technisch leicht zugänglichen Isocyanate mit mindestens zwei Isocyan-Gruppen, wie das 2,4- und 2,6-Toluylen-diisocyanat sowie Gemische dieser Isomeren (TDI), Polyphenyl-polymethylen-polyisocyanate, wie sie durch Einwirkung von Phosgen auf Anilin-Formaldehyd-Kondensationsprodukte hergestellt werden (Roh-MDI), Carboimid-, Urethan-, Allophanat-, Isocyanurat-, Harnstoff- oder Biuret-Gruppen enthaltende Polyisocyanate (modifizierte PUR-Härter) sowie Verbindungen mit gleichen oder ähnlichen Eigenschaften.

Als hydraulische Binder kommen erfindungsgemäß unter anderem Stoffe in Betracht, die Wasser irreversibel binden, wie reaktionsfähige Tonsäuren (Hydraulefaktoren), Puzzolane (hydraulische Zuschläge) in Kalk, Puzzolan, mörtelhydratische Puzzolane wie Diatomeenerde, Molererde, Si-Stoff und -truß, anhydrische Puzzolane zusammen mit Calciumhydroxid sowie handelsübliche Puzzolankalke, hydraulische Kalke, Romankalke, lufttrockene Tone, Tricalciumsilicat, Dicalcium-aluminium-ferrit, ferner latent hydraulische Stoffe, Puzzolanzement, Tonerdeschmelzzement, wasserhärtbare Stoffe, wie Gips, Anhydrit usw., die gegebenenfalls durch bekannte modifizierende Stoffe in ihrem Eigenschaftsbild abgerundet sind.

Übliche Zuschlagstoffe, wie Quarzmehl, Splitt, Sand, Kies, Ziegeleibruch, Ziegeleimehl u. a., können allein oder gemeinsam mit Leichtfüllstoffen, wie expandiertem Polystyrol oder anderen gewichtsreduzierenden Kunststoffen, Perlit, Millcell-Perlen und -Pellets, Schwimmaschen, Sarnalit, Expanver, Glasfoam, Blähton, Blähschiefer, Siliperl, Aufmahlungen von Siporex u. a., verwendet werden.

Der Einsatz von ausgewählten Leichtfüllstoffen führt zu leichten Stoffen mit Dichten von unter 1 kg/dm³.

Als verstärkende Fasern kommen z. B. solche aus Glas, Anhydrit, Kohlenstoff, Bor, Asbest, Polypropylen, Polyestern sowie natürliche und synthetische Textilfasern erfindungsgemäß in Betracht.

Zur Verbesserung der Biegezugfestigkeit ist eine relative Anhäufung des Fasermaterials in den Randzonen des neuen Bau-, Dämm-, Möbelbau- und Innenausbaustoffes von Vorteil. Erfindungsgemäß hat sich hier eine Glasfaseranreicherung aus einer vorgefertigten Stapel- und/oder Endlosglasfasermatte und/oder Glasgewebe mit z. B. Schuß und Kette oder eine Faseranreicherung nach den in der Kunststofftechnologie bekannten Verfahren des GFK-Spritzens bewährt. Es ist vorteilhaft, die Schlichte der Glasfasern hinsichtlich ihrer chemischen Wechselwirkungen auf z. B. Betonzuschlagstoffe und Beton selbst abzustimmen.

Die nichtbrennbaren flächigen Bau-, Dämm-, Möbelbau- und Innenausbaustoffe werden am besten wie folgt hergestellt : Austapezieren senkrecht stehender flächiger Formen mit handelsüblichen Glasfasermatten, deren Flächengewicht je nach gewünschter Endfestigkeit des Fertigproduktes variieren kann ; Ausgießen des Zwischenraumes mit entsprechend beweglicher hydraulischer Bindemittel- und Füllstoffaufbereitung, die 0,2 bis 18 Gew.-%, am besten 0,5 bis 5,0 Gew.-%, eines Polyurethanhärters, wie MDI und/oder ein Prepolymer in verteilter, gegebenenfalls hochdisperser Form enthält ; und gegebenenfalls Verdichten. Der ausgefüllte Zwischenraum beträgt je nach gewünschtem Endprodukt 2 mm oder mehr ; die erzielbare maximale Spaltbreite wird lediglich durch verfahrenstechnische Grenzen eingeschränkt. Die bevorzugte Spaltbreite beträgt 5 bis 100 mm. Die flächige Körpergröße ist durch die technischen Möglichkeiten im Formenbau begrenzt. Um eine Entlüftung und völlige Durchtränkung der Glasfasermatten zu gewährleisten, haben sich handelsübliche Betonzusatzmittel, wie Betonverflüssiger und/oder Betonverdichtungsmittel, auch Einpreßhilfen als wirksam erwiesen. Nach dem Verfüllen des Zwischenraumes wird die Temperatur auf 35 bis 250 °C, am besten auf etwa 80 bis 180 °C, erhöht, z. B. durch elektrisches Widerstandserwärmen mit Hilfe eines durch die Füllmasse geleiteten Stromes, durch Kontakt- bzw. Strahlungserwärmung von der Formwand her oder mit Hilfe anderer Verfahren. In Abhängigkeit vom Eindickungsgrad wird nach etwa 5 Sekunden bis 2 Stunden entformt und das geformte Produkt in feuchtem Milieu bis zu etwa vier Wochen nachgehärtet, bevor Trocknen, Bearbeiten, Oberflächenvergüten, Transport und Einbau stattfinden.

Bei einem anderen vorteilhaften Herstellungsverfahren wird eine flächige, horizontale Form mit einer Glasfasermatte und/oder einem Glasfasergewebe, die mit flüssiger, modifizierter Zementaufbereitung getränkt ist, oder mehreren solcher Glasfasermatten und/oder -geweben ausgelegt und mit frischem isocyanathaltigen Mörtel oder Beton beschichtet. Diese Schicht wird dann mit einer weiteren Glasfaserschicht abgedeckt. Nachdem die Form auf diese Weise gefüllt ist, wird die Schließeinheit von oben auf die Füllmaterialien gefahren. Durch Erwärmen auf 220 °C erfolgt die Eindickung. Das gebildete Formteil ist je nach Dicke, Zusammensetzung und Temperatur in 0,5 Sekunden bis 2 Stunden entformbar und wird am besten einer Nachhärtung, wie vorstehend beschrieben, unterzogen.

Die beschriebenen Verfahren ergeben randzonenverstärkte, biegefeste, unbrennbare, gegebenenfalls sehr leichte, glatte Platten oder andere flächige Körper, die in kurzen Taktzeiten herstellbar sind. Besonders der Zusatz von extrem leichten Füllstoffen, wie expandiertem Polystyrol, führt zu Kernschichten, die bei ausreichender Druckfestigkeit gemeinsam mit den beiden zugfesten Randzonen einen leichten, biegefesten und unbrennbaren Bau-, Dämm-, Möbelbau- und Innenausbaustoff ergeben.

Durch die Erfindung wird somit eine Bau-, Dämm-, Möbelbau- und Innenausbaustoffgruppe zur Verfügung gestellt, die erstmals vorteilhafte wirtschaftliche Eigenschaften, wie kurze Taktzeit bei der Herstellung, mit Unbrennbarkeit, geringer Dichte, hoher Festigkeit, Frost- und Taubeständigkeit, Kaschier- und Lackierbarkeit, Verschraubbarkeit, angenehmer Griff und Klang, Wetterbeständigkeit, Schall- und Wärmedämmung in sich vereint und die aus Rohstoffen herstellbar ist, die auch in fernerer Zukunft ausreichend zur Verfügung stehen dürften. Allgemein gültige Anforderungen, die auch sicherheitstechnische Bedürfnisse berücksichtigen, werden von diesen Stoffen sowohl im Hoch-, Tief-, Fahrzeug-, Flugzeug- und Schiffsbau als auch im Möbel- und Innenausbau überall selbst dort erfüllt, wo mehrere oder alle dieser vorteilhaften Eigenschaften von Bedeutung sind.

Beispiel 1

Zur Herstellung eines flächigen Körpers, insbesondere einer Platte wurde ein heizbarer, planer Preßtisch mit den Abmessungen 1 000 mm × 2 000 mm mit Distanzhaltern von 19 mm Höhe versehen. Als Formmaterial dienten polierte, gewachste Edelstahlbleche. Eine Glasfasermatte mit einem Flächengewicht von 375 g/m² wurde in einem Bad, das Einbauten in Form von drei angetriebenen Quetschwalzen enthielt, mit folgender Aufbereitung getränkt:

```
  1,25 Gew.-Tle. Methylcellulose
  0,08 Gew.-Tle. Einpreßhilfsmittel
  0,6  Gew.-Tle. Betonbeschleuniger
  8,75 Gew.-Tle. Acrylat-Dispersion, 50 %ig
150    Gew.-Tle. Portlandzement PZ 35
 35    Gew.-Tle. Quarzmehl, < 100 μm
115    Gew.-Tle. Wasser.
```

Überschüssiges Material wurde außerhalb des Bades von der Glasfasermatte abgestreift. Die derart vorbereitete Matte wurde bei Raumtemperatur in die Presse eingelegt und mit einer Aufbereitung aus dem Vielfachen von

```
10   l expandierten Polystyrol-Perlen, 1-2 mm
 4   kg Portlandzement PZ 55
 2   kg Quarzmehl, < 100 μm
0,5  kg Elektrofilterasche
0,26 kg MDI
0,02 kg Betonbeschleuniger
1,4  kg Wasser
```

gleichmäßig bis zum Erreichen der durch die Distanzhalter vorgegebenen Schichthöhe abgedeckt. Die so entstandene Packung wurde mit einer zweiten Glasfasermatte, die wie die erste Matte getränkt worden war, belegt. Sodann wurde die Presse niedergefahren und ein spezifischer Druck von 8 bar ausgeübt und die Temperatur auf 155 °C erhöht. Nach 12,5 min wurde abgekühlt und nach 15 min das Formprodukt mit Hilfe eines Vakuumhebers entformt.

Die erhaltene Platte wurde plan gelagert, nach 2 h in ein Wasserbad gegeben, belastet und 14 Tage darin belassen. Anschließend wurde die Platte 72 h bei 45-48 °C getrocknet. Danach erfüllte die Platte die Anforderungen und Prüfbedingungen der Baustoffklasse A 2 nach DIN 4102, Teil 1, Ausgabe 9/1977 « Baustoffe-Begriffe ». Die Dichte der Platte betrug 820 g/dm³, ihre Biegezugfestigkeit 745 N/cm². Die Platte hatte eine glatte Oberfläche, war frost- und tauwechselbeständig, wasser-, wetter- und lichtbeständig, nagelbar und transportstabil sowie querzugfest. Sie zeigte einen angenehmen Griff und Klang.

Beispiel 2

Eine nach dem Verfahren des Beispiels 1 hergestellte Platte wurde nach dem Trocknen mit Schleifpapier der Güte 220 abgezogen und mit einer 5 %igen Acrylat-Dispersion besprüht. Die Oberfläche war glatt und soweit verfestigt, daß kein Kreiden des Bindemittels auftrat. Nach dem Verflüchtigen des Wassers aus der Dispersion konnte die Platte mit dekorativen Schichten versehen werden.

### Ansprüche

1. Verfahren zur Herstellung nichtbrennbarer flächiger Körper für Bau-, Dämm-, Möbelbau- und Innenausbauteile durch Schichten hydraulisch abbindender anorganischer Stoffe, die auch Zuschlagstoffe und Modifizierungsmittel und mindestens teilweise Glasfasern oder -matten enthalten, dadurch gekennzeichnet, daß mindestens zwischen zwei Schichten aus mit Glasfasermatten und/oder -gewebe verstärkten hydraulisch abbindenden anorganischen Stoffen eine 0,2 bis 18 Gew.-% eines Isocyanats mit mindestens zwei Isocyanatgruppen im Molekül enthaltende hydraulisch abbindende Masse, der Leichtzuschlagstoffe zugesetzt worden sind, aufgebracht und der geschichtete flächige Körper bei Temperaturen von 35 bis 250 °C verpreßt, anschließend entformt wird, wobei die weitere Verfestigung bis zur Endfestigkeit durch Hydratation erfolgt.

2. Verfahren nach Anspruch 1, dadurch gekennzeichnet, daß die Oberflächen der flächigen Körper spangebend bearbeitet, imprägniert und gegebenenfalls dekorativ beschichtet werden.

### Claims

1. Process for the manufacture of non-flammable sheet-like bodies for building components, insulating components, furniture making components and interior fitment components by laminating hydraulically setting inorganic materials which also contain additives and modifiers and at least partially contain glass fibres or glass mats, characterised in that at least between two layers of hydraulically setting inorganic materials reinforced with glass fibre mats and/or fabrics there is applied a hydraulically setting composition which contains 0.2 to 18 % by weight of an isocyanate having at least two isocyanate groups in the molecule, and to which lightweight additives have been added, and that the laminated sheet-like body is pressed at temperatures of 35 to 250 °C and subsequently demoulded, the further consolidation, until the final strength is reached, taking place by hydration.

2. Process according to Claim 1, characterised in that the surfaces of the sheet-like bodies are machined using cutting tools, impregnated and, if desired, provided with a decorative layer.

### Revendications

1. Procédé de fabrication de corps plats incombustibles pour éléments de construction, d'isolation, de construction de meubles et de construction intérieure par disposition par couches de corps anorganiques à prise hydraulique contenant également des agrégats et des agents modifiants et au moins partiellement des fibres ou des mats de verre, caractérisé en ce que, au moins entre deux couches en matériaux anorganiques à prise hydraulique renforcés par des mats et/ou des tissus de fibres de verre, on ajoute aux agrégats légers une masse à prise hydraulique contenant de 0,2 à 18 % en poids d'un isocyanate contenant au moins deux groupes isocyanate dans la molécule, on épand et on comprime les corps plats stratifiés à des températures de 35 à 250 °C, on les démoule ensuite, le durcissement s'effectuant par hydratation jusqu'à la compacité finale.

2. Procédé selon la revendication 1, caractérisé en ce que les surfaces superficielles des corps plats sont traitées par enlèvement, sont imprégnées et le cas échéant sont enduits décorativement.